(19) **Europäisches Patentamt**
**European Patent Office**
**Office européen des brevets**

(11) **EP 2 727 391 B1**

(12) **FASCICULE DE BREVET EUROPEEN**

(45) Date de publication et mention
de la délivrance du brevet:
**18.11.2020 Bulletin 2020/47**

(51) Int Cl.:
*H04W 16/08* (2009.01)          *H04W 84/04* (2009.01)
*H04W 88/08* (2009.01)          *H04W 52/38* (2009.01)

(21) Numéro de dépôt: **12738519.3**

(22) Date de dépôt: **22.06.2012**

(86) Numéro de dépôt international:
**PCT/FR2012/051440**

(87) Numéro de publication internationale:
**WO 2013/001218 (03.01.2013 Gazette 2013/01)**

(54) **STATION DE BASE A ANTENNES MULTIPLES POUR LE DÉLESTAGE ADAPTATIF D'UNE ZONE SURCHARGÉE**

BASISSTATION MIT MEHREREN ANTENNEN ZUR ADAPTIVEN ENTLASTUNG EINES ÜBERLASTENEN GEBIETS

BASE STATION WITH MULTIPLE ANTENNAS FOR ADAPTIVE OFFLOADING OF A HOTSPOT

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **30.06.2011 FR 1155906**
          **06.07.2011 FR 1156122**

(43) Date de publication de la demande:
**07.05.2014 Bulletin 2014/19**

(73) Titulaire: **ORANGE**
**75015 Paris (FR)**

(72) Inventeurs:
• **COMBES, Richard**
  **75016 Paris (FR)**
• **AKBARZADEH, Sara**
  **75014 Paris (FR)**
• **ALTMAN, Zwi**
  **92320 Chatillon (FR)**

(56) Documents cités:
**EP-A1- 1 638 356          WO-A1-2009/029011
WO-A1-2010/115467          WO-A1-2010/126667
GB-A- 2 354 674**

**Description**

L'invention se rapporte au domaine des télécommunications. Plus particulièrement, l'invention concerne l'élargissement de la zone de couverture de stations dites « stations serveuses », qui peuvent être des stations émettrices seulement, réceptrices seulement ou émettrices/réceptrices, dans le domaine radiofréquences (par exemple réseaux sans-fil) ou dans un autre domaine de fréquences (par exemple l'infrarouge).

L'invention concerne notamment la problématique du « déchargement » (« *offloading* » en anglais), dans laquelle des stations radio, dites «de déchargement», traitent une partie du trafic de communications de manière à décharger des stations voisines et réduire la congestion dans les zones de forte charge, particulièrement aux moments de la journée où le trafic de communications est élevé.

L'invention est compatible en particulier avec toutes les technologies d'accès radio connues (TDMA, CDMA, W-CDMA, OFDMA, et ainsi de suite). Elle s'applique notamment aux réseaux cellulaires utilisant la technologie GSM/GPRS, telle que définie dans la version 97 et les versions ultérieures de la norme GSM, ou la technologie UMTS (« *Universal Mobile Telecommunications System* »), telle que définie notamment dans les normes 23.002, 23.003 et 29.060 du projet 3GPP (« *Third-Generation Partnership Project* »), la norme LTE (« *Long Term Evolution* »), ou encore la norme HSPA (« *High Speed Packet Access* »).

On rappelle que, alors que le GSM utilise un support de transmission de données par commutation en mode circuit (« *circuit-switched* » en anglais), le GPRS y ajoute un nouveau support de transmission de données par commutation en mode paquets (« *packet-switched* » en anglais), qui permet de fournir à une station mobile une connectivité IP («*Internet Protocol*») disponible en permanence, mais dans laquelle les ressources radio sont allouées uniquement quand des données doivent être transférées. Les abonnés d'un opérateur mobile peuvent ainsi accéder à des services utilisant le protocole IP, tels que la messagerie électronique, le téléchargement de fichiers, la consultation de sites Web ou WAP.

L'UMTS utilise la commutation en mode circuit et la commutation en mode paquets. L'UMTS utilise la technologie W-CDMA, normalisée par le 3GPP, et constitue la mise en œuvre européenne des spécifications IMT-2000 de l'UIT (« Union Internationale des Communications ») pour les systèmes radio cellulaires 3G. L'UMTS permet d'échanger des données contenues dans des paquets IP avec des serveurs appartenant à un réseau extérieur au réseau UMTS, tel que le réseau Internet.

La norme LTE fait partie de la norme UMTS, mais y incorpore de nombreuses modifications et améliorations, notamment l'utilisation de la modulation OFDM pour la liaison descendante et de SC-FDMA pour la liaison montante (au lieu de W-CDMA pour l'UMTS). Le LTE nécessite une couverture radio dédiée, distincte de la couverture UMTS.

Le HSPA est la combinaison des protocoles HSDPA (« *High Speed Downlink Packet Access* ») pour la voie descendante, et HSUPA (« *High Speed Uplink Packet Access* ») pour la voie montante.

Comme indiqué ci-dessus, l'invention concerne notamment les moyens dont dispose un opérateur pour augmenter la capacité de son réseau, notamment dans les zones de trafic élevé.

Pour ce faire, on utilise dans les réseaux mobiles cellulaires des cellules de taille relativement faible ou très faible (désignées de manière générale par « petites cellules » dans le cadre de la présente invention) en plus des cellules « macro » de taille classique. On appelle généralement « microcellule » une cellule couvrant une zone dont le rayon est inférieur à 500 $m$, « picocellule » une cellule couvrant une zone de l'ordre de 200 x 200 $m^2$, et « femtocellule » une cellule couvrant une zone de l'ordre de 10 x 10 $m^2$. La zone de couverture de chaque station peut être limitée en contrôlant sa puissance.

En effet, la souplesse en termes de taille cellulaire est une caractéristique de la technologie mobile 2G et des technologies suivantes, et représente un facteur significatif de l'accroissement de capacité des réseaux. Les contrôles de puissance mis en œuvre dans les réseaux mobiles font qu'il est plus facile de réduire les interférences entre cellules voisines utilisant les mêmes fréquences. En subdivisant des cellules et en créant plus de cellules (on parle de densification du réseau) pour pouvoir desservir des zones à haute densité, un opérateur de réseau cellulaire peut optimiser l'utilisation du spectre et faire en sorte que la capacité puisse augmenter.

On peut ainsi, au moyen d'une station serveuse de puissance relativement faible (appelée « petite station » dans le cadre de la présente invention), couvrir une zone limitée. Cela permet d'augmenter la capacité d'un réseau dans des zones d'accès difficile ou coûteux dans l'approche « macrocellulaire » classique.

Plus précisément, une microcellule peut couvrir une zone comme un centre commercial, un hôtel, ou un centre de transport. Les microcellules sont souvent déployées temporairement pendant des événements sportifs et d'autres occasions dans lesquelles on sait à l'avance que l'on aura besoin d'une capacité supplémentaire à un emplacement spécifique.

Une picocellule couvre généralement une zone de petite taille, par exemple à l'intérieur d'un bâtiment (bureaux, centres commerciaux), ou, plus récemment, à l'intérieur d'un avion. Les picocellules sont généralement utilisées pour étendre la couverture aux zones intérieures, c'est-à-dire là où les signaux extérieurs ne pénètrent pas bien, ou pour augmenter la capacité de réseau dans des zones à haute densité d'utilisation du téléphone, comme dans les gares de train. Une station de base de picocellule est généralement une unité à bas prix, de petite taille, et relativement simple. On trouve des picocellules pour la plupart des technologies cellulaires telles que le GSM/GPRS, l'UMTS et le LTE.

Dans les réseaux GSM/GPRS, en particulier, chaque station de base de picocellule est connectée à un BSC (initiales des mots anglais *« Base Station Controller »* signifiant « Contrôleur de Stations de Base »). En fait, de nombreuses picocellules sont connectées à chaque BSC ; le BSC assure la gestion des ressources radio et des fonctions de « handover » (migration d'un terminal mobile d'une cellule à une cellule voisine), et agrège des données aux fins de transmission vers le Centre de Commutation Mobile (en anglais, *« Mobile Switching Center »*, ou MSC) et/ou le Nœud de Support de Passerelle GPRS (en anglais, *« Gateway GPRS Support Node »*, ou GGSN). La connectivité entre les unités de picocellule et le BSC est généralement réalisée au moyen d'un câblage intérieur à un bâtiment ; les systèmes les plus récents utilisent un câblage Ethernet ; les avions utilisent des liaisons par satellite.

Les développements les plus récents concernent une unité contenant non seulement une station de picocellule, mais aussi apte à assurer beaucoup de fonctions du BSC et quelques-unes du MSC. Ce type de picocellule est parfois appelé une « station de base de point d'accès » ou une « femtocellule d'entreprise ». Dans ce cas, l'unité contient tous les moyens requis pour se connecter directement à Internet, sans avoir besoin de l'infrastructure BSC/MSC. C'est potentiellement une approche plus rentable.

Quant aux réseaux UMTS, ils peuvent comprendre des réseaux privés (par exemple des réseaux domestiques) constitués de cellules de faible taille appelées « femto NodeB », dans lesquelles les stations de base, appelées *« Home NodeB »* (HNB), combinent chacune les fonctions de NodeB et de RNC (initiales des mots anglais *« Radio Network Controller »* signifiant « Contrôleur des Ressources Radio »). Chaque HNB est relié à une passerelle (*« HNB Gateway »*) située à l'extérieur du réseau privé dans le réseau d'accès radio de l'opérateur ; la HNB Gateway gère le HNB et le trafic des abonnés, et sert d'intermédiaire avec le réseau cœur. On notera que les réseaux GSM comprennent eux aussi des passerelles HNB Gateway dotées de fonctionnalités analogues.

Outre les technologies décrites ci-dessus, l'invention s'applique en particulier aux architectures « femto 3G » telles que définies dans le document TR 25.820 V8.2.0 (2008-09) du 3GPP, ainsi qu'aux futures architectures « femto LTE ». Ces architectures utilisent des femtocellules dans lesquelles on peut déployer un réseau mobile domestique à faible coût en utilisant l'infrastructure haut-débit déjà présente chez l'abonné. Ce contexte est du plus haut intérêt pour les opérateurs : en effet, on prévoit qu'une proportion significative d'abonnés des futures offres téléphoniques possèdera une femtocellule. De plus, ces femtocellules auront la possibilité d'ouvrir leur accès à d'autres utilisateurs (accès ouvert ou accès hybride).

Ainsi, une solution connue pour augmenter la capacité d'un réseau consiste à mettre en place des stations supplémentaires dans les zones de trafic élevé. Toutefois, il est clair que la multiplication de stations supplémentaires a pour inconvénients les coûts d'achat, d'installation et de maintenance de ces nouvelles stations.

Une autre solution consisterait, *a priori,* à augmenter la zone de couverture des stations en augmentant leur puissance pilote. En effet, au moment de leur arrivée dans le réseau, les terminaux mobiles s'attachent généralement à la station serveuse dont le signal pilote reçu est le plus fort, et s'attachent donc à une petite cellule locale plutôt qu'au réseau macro si la puissance pilote reçue de la station locale est supérieure à celle reçue de la station macro. Il a donc été envisagé de déployer des réseaux dits « hétérogènes », qui comprennent à la fois des cellules macro et des petites cellules (par exemple, femto) gérées par le même opérateur. De tels réseaux hétérogènes permettraient à une petite station de décharger une station macro avoisinante en absorbant une partie du trafic de cette station macro, notamment si l'accès à la petite station est ouvert à tous les abonnés audit opérateur.

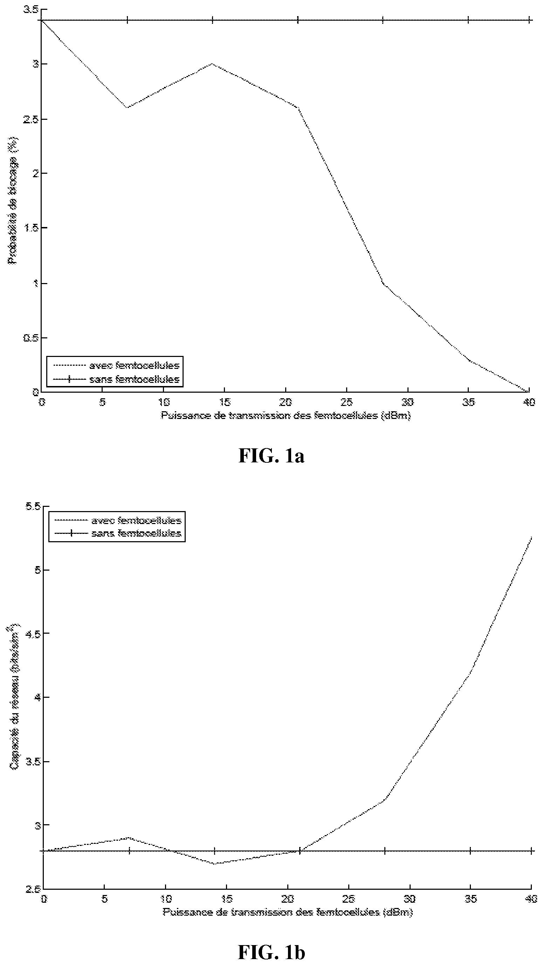

A cet égard, il est utile de s'appuyer sur les résultats d'une étude concernant les réseaux LTE, publiée dans l'article « Enhancing LTE network capacity using self-organized femtocell off-loading », de Sara Akbarzadeh, Richard Combes, et Zwi Altman (soumis à Globecom 2011). La **figure 1a** ci-joint, inspirée de cet article, représente le taux de blocage moyen (*« Blocking Call Rate »* en anglais) dans un réseau macro/femto en fonction de la puissance émise par les stations femto ; la **figure 1b** ci-joint, elle aussi inspirée de cet article, représente la capacité de ce réseau (*« Network Capacity »* en anglais) en fonction de la puissance émise par les stations femto. Sur ces figures, la courbe cochée se rapporte à un réseau purement macro (i.e. sans femtocellules), et la courbe non cochée se rapporte à un réseau hétérogène macro/femto. Ces courbes montrent que, pour que l'introduction de femtocellules dans un réseau macro puisse apporter des gains significatifs, il faudrait que les stations femto émettent avec une puissance supérieure à 25 dBm, par exemple 40 dBm. Or de telles valeurs sont bien au-delà des valeurs de puissance admissibles pour des stations femto, notamment en raison de la limitation des puissances d'émission imposée par les normes en vigueur concernant l'exposition des personnes aux ondes électromagnétiques.

La demande de brevet WO 96/37010 divulgue un système de télécommunications cellulaire comprenant une station de base connectée à une pluralité d'antennes émettant toutes le même signal. Selon une utilisation de cette station de base comme station micro pour desservir l'intérieur d'un bâtiment, les antennes sont respectivement placées dans des pièces respectives du bâtiment ; la station micro dessert des « cold spots » (zones du bâtiment dans lesquelles le signal de la cellule macro environnante est trop faible), et des « hot spots » (zones du bâtiment dans lesquelles le signal de la cellule macro environnante est suffisamment fort) ; la station micro est apte à décharger la cellule macro (*offloading*) dans les *hot spots*.

On notera que le système proposé par la demande de brevet WO 96/37010 est avantageusement différent d'un système comprenant une station de base dans chaque zone du bâtiment à desservir, et ce, principalement pour deux raisons. Premièrement, les diverses antennes partagent, *via* la station de base, le même lien direct (« *backhaul link* » en anglais) avec le cœur de réseau mobile ou le réseau fixe. Deuxièmement, les signaux respectifs émis par les diverses antennes sont identiques ; autrement dit, il n'y pas d'utilisation multiple (« *reuse* » en anglais) de ressources (selon la technologie radio sous-jacente : temps, fréquences, temps/fréquence, codes, et ainsi de suite) entre les diverses antennes. La demande de brevet WO2010115467 divulgue un réseau cellulaire agencé à l'intérieur d'un bâtiment, comprenant une station alimentant plusieurs ports d'antenne via un séparateur ; les antennes connectées à ces ports d'antenne transmettent des signaux "downlink" et reçoivent des signaux "uplink". La puissance du signal downlink au niveau de chaque port d'antenne est réglée en fonction de la puissance du signal uplink reçue par ce port d'antenne.

La demande de brevet EP1638356 divulgue un réseau cellulaire comprenant une pluralité de stations de base (13, 32, 50-56) pouvant chacune être connectée, via un contrôleur de connexions (1), à une antenne (12, 64) quelconque parmi une pluralité d'antennes. Ledit contrôleur de connexions (1) comprend un commutateur (4, 33, 59) pouvant être actionné par un signal de contrôle émis par une entité de commande (5).

L'invention est définie par les revendications.

La présente invention concerne donc une station émettrice et/ou réceptrice d'ondes électromagnétiques, comprenant au moins deux ports d'antenne, chaque port d'antenne respectif étant apte à être connecté à un groupe d'antennes respectif comportant une ou plusieurs antenne(s), les signaux respectifs alimentant des ports d'antenne respectifs étant identiques entre eux sauf le cas échéant en ce qui concerne leurs puissances respectives, ladite station comprenant en outre :

- des moyens de réglage aptes à régler séparément la puissance respective d'au moins un desdits signaux respectifs, et
- des moyens de commande aptes à commander lesdits moyens de réglage conformément à un signal de contrôle reçu par ladite station.

En effet, les auteurs de la présente invention ont réalisé qu'en pratique les besoins d'un opérateur de réseau en termes de déchargement (*offloading*) ne sont pas constants : ils peuvent au contraire varier considérablement en fonction de l'heure de la journée, du jour de l'année, de travaux de maintenance, d'installation de nouveaux équipements ou de suppression d'anciens équipements, et ainsi de suite. Or, comme rappelé ci-dessus, les terminaux mobiles s'attachent à la station serveuse dont le signal pilote reçu est le plus fort, et par conséquent la possibilité de détourner vers une petite station une partie plus ou moins grande du trafic de communications géré par une station macro dépend de la puissance relative entre le signal pilote émis par la station macro et le signal pilote émis par la petite station dans la zone géographique environnant cette petite station. Les auteurs de la présente invention en ont conclu qu'il serait très avantageux de pouvoir régler, en fonction des besoins du moment, la puissance émise par une petite station dans un *hot spot,* sans pour autant affecter la puissance émise par cette petite station dans un *cold spot,* puisque dans ce dernier les besoins en termes de trafic (et les contraintes quant à l'exposition des personnes aux rayonnements électromagnétiques) sont habituellement stables dans le temps.

C'est pourquoi la présente invention prévoit que la puissance du signal alimentant au moins un port d'antenne de la station serveuse puisse être réglée séparément de la puissance des signaux alimentant les autres ports d'antenne, par exemple à distance par l'opérateur du réseau, ou bien directement sur l'appareil par le possesseur d'une petite station. On pourra prévoir par exemple que l'on peut régler séparément la puissance de *tous* les signaux alimentant un port d'antenne de la station serveuse, ou la puissance de tous les signaux *à l'exception* de l'un d'entre eux (alimentant par exemple une antenne située dans un *cold spot*).

On notera que cette caractéristique de la station selon l'invention ne figurait pas dans le système de télécommunications selon la demande de brevet WO 96/37010, dans lequel les diverses antennes émettent des signaux, notamment des signaux pilotes dits CCH (« *Control Channel* »), ayant tous la même puissance par construction.

Concernant la commande des moyens de réglage selon la présente invention, divers modes de réalisation sont naturellement possibles. Par exemple, on pourra munir la station selon l'invention de moyens pour recevoir ledit signal de contrôle de la part d'un opérateur réseau *via* le lien *backhaul* avec le cœur de réseau, et/ou de moyens pour recevoir ledit signal de contrôle de la part d'un opérateur réseau ou d'un technicien réseau *via* une liaison sans-fil.

L'invention concerne également un système de télécommunications. Ledit système est remarquable en ce qu'il comprend une station émettrice et/ou réceptrice d'ondes électromagnétiques telle que décrite succinctement ci-dessus, connectée à au moins deux groupes d'antennes, et en ce que chaque groupe d'antennes respectif est situé dans une zone géographique respective séparée de chacune des autres zones géographiques analogues par au moins une paroi.

Ce système de télécommunications pourra naturellement faire partie d'un réseau mobile hétérogène, ou d'un réseau sans-fil tel qu'un réseau Wi-Fi, par exemple.

On notera que par « antenne », on désigne ici (de manière classique) tout objet capable de rayonner ou de capter des ondes électromagnétiques, et relié à un cœur de station par une ligne de transmission ou un guide d'ondes. Par exemple, un relais Wi-Fi ou GSM ne constitue pas une antenne au sens de l'invention.

On notera également que par « paroi », on désigne ici (de manière classique) une surface absorbant ou réfléchissant, partiellement ou totalement, les ondes électromagnétiques dans les fréquences utilisées.

Le système de télécommunications selon l'invention permet de décharger une cellule macro environnant ce système de manière optimale dans le temps, c'est-à-dire en tenant compte des besoins de l'opérateur du réseau pour satisfaire à tout moment, avec les ressources matérielles dont il dispose, le trafic de communications de ses abonnés. Selon des caractéristiques particulières, une première zone géographique est située à l'intérieur d'un bâtiment, et une deuxième zone géographique est située à l'extérieur du même bâtiment.

En effet, les auteurs de la présente invention ont réalisé que les difficultés pour étendre au-delà d'un bâtiment la couverture d'une station donnée desservant ce bâtiment sont dues principalement à des éléments de l'environnement, tels que les murs et les objets métalliques, qui atténuent fortement le signal en causant des pertes, des diffractions et des réflexions multiples.

Grâce à ces dispositions, une station serveuse dont la couverture était, selon l'état de l'art, limitée à l'intérieur d'un bâtiment, peut, grâce à l'invention, accroître sa couverture jusqu'à une certaine distance autour de ce bâtiment. De ce fait, des utilisateurs se trouvant hors du bâtiment (mais pas trop loin) peuvent se connecter à cette station.

On notera au passage que ce système de télécommunications est très différent des systèmes multi-antennes connus. Par exemple, la demande WO 2009/029011 divulgue un système comprenant une station de base connectée à une pluralité d'antennes disposées à l'intérieur et à l'extérieur d'un bâtiment, mais dans lequel les antennes respectives émettent (en fonction des terminaux respectifs avec lesquels elles communiquent individuellement) des signaux respectifs *différents en termes de ressources exploitées.*

Le système de télécommunications selon l'invention apporte un gain important de capacité dans les zones de déploiement dense, par exemple en zone urbaine ; en effet, il suffira de déployer des systèmes selon l'invention pour augmenter massivement la capacité des réseaux mobiles en zone urbaine, puisque ces systèmes seront capables de décharger les cellules macro environnantes bien mieux que ce dont sont capables les petites stations (macro, micro, pico ou femto) selon l'état de l'art, et ce, pour un coût très faible par rapport à l'installation d'une nouvelle petite station.

Un avantage supplémentaire de l'invention est une baisse de consommation dans les terminaux mobiles et une baisse du rayonnement émis par ces terminaux mobiles puisque, l'offre d'accès au réseau devenant plus dense, un terminal mobile pourra communiquer *via* une station proche de lui, et donc la puissance transmise par le terminal mobile diminuera. Cela permet notamment d'économiser la batterie (et donc d'augmenter l'autonomie du terminal mobile), et de réduire l'exposition des utilisateurs de terminaux aux rayonnements électromagnétiques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour gérer le fonctionnement d'une station telle que succinctement décrite ci-dessus, lorsqu'il est exécuté sur un ordinateur.

Les avantages offerts par ce programme d'ordinateur sont essentiellement les mêmes que ceux offerts par ladite station.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :

-   la figure 1a, décrite ci-dessus, représente le taux de blocage moyen dans un réseau macro/femto en fonction de la puissance émise par les stations femto,
-   la figure 1b, décrite ci-dessus, représente la capacité d'un réseau macro/femto en fonction de la puissance émise par les stations femto,
-   les figures 2a et 2b représentent schématiquement la structure d'une station serveuse selon deux modes de réalisation de l'invention,
-   la figure 3 représente schématiquement une architecture classique de réseau UMTS comprenant des cellules « femto NodeB », et
-   la figure 4 illustre un mode de réalisation du système de télécommunications selon l'invention.

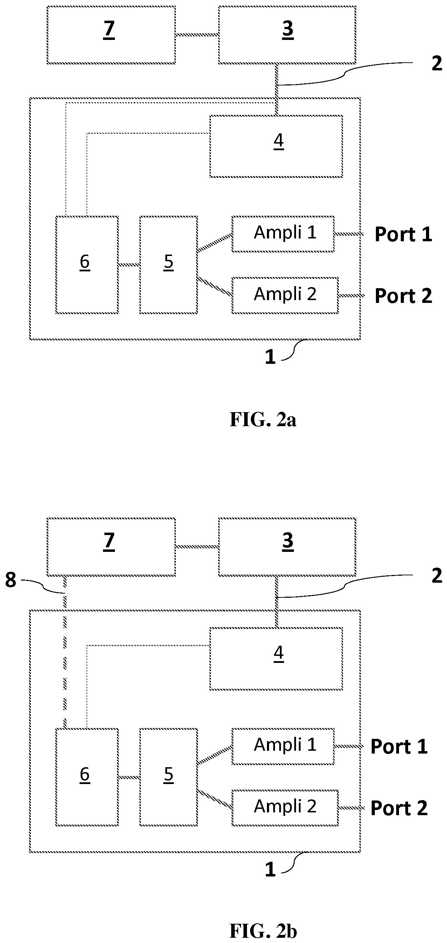

Les **figures 2a et 2b** représentent schématiquement la structure d'une station serveuse selon deux modes de réalisation de l'invention. On prendra ici, à titre d'exemple, l'application de l'invention à un réseau radio mobile cellulaire.

De manière classique, la station serveuse 1 est connectée par un lien *backhaul* 2 au cœur de réseau mobile 3, et comprend un émetteur/récepteur (« *transceiver* » en anglais) 4.

Conformément à l'invention, ledit émetteur/récepteur 4 est connecté à au moins deux ports d'antenne. En émission, les ports d'antenne délivrent des signaux identiques (notamment les signaux pilotes) vers les antennes ou groupes d'antennes, sauf, le cas échéant, en ce qui concerne la puissance de ces signaux. Une unité de réglage 5 est, précisément, apte à régler la puissance de chaque amplificateur respectif connecté à un port d'antenne respectif.

Cette unité de réglage 5 est commandée par une unité de commande 6 pilotable par un signal de contrôle externe. Optionnellement, cette unité de commande 6 est en outre pilotable par action manuelle sur la station 1 de la part de l'utilisateur de la station 1 ou d'un technicien travaillant pour l'opérateur du réseau ; une telle action manuelle peut, par exemple, servir à établir un niveau de puissance de référence au niveau de chacun desdits amplificateurs de manière à compenser les pertes en ligne entre chaque amplificateur respectif et son antenne respective.

Le contenu de ce signal de contrôle externe est déterminé par un serveur de configuration 7 associé au cœur de réseau 3, en fonction des besoins de l'opérateur en ce qui concerne les puissances émises par les diverses antennes de la station 1.

La figure 2a illustre une première variante, dans laquelle le signal de contrôle est véhiculé par le lien *backhaul* 2. La figure 2b illustre une deuxième variante, dans laquelle le signal de contrôle est véhiculé par une liaison sans-fil (par exemple, radio ou optique) 8 entre le serveur de configuration 7 et l'unité de commande 6.

Considérons à présent un réseau de télécommunications comprenant un nombre total $A$, où $A \geq 2$, d'antennes, ou de groupes d'antennes équipant les stations du réseau. On rappelle à cet égard qu'on utilise classiquement des groupes d'antennes dans les systèmes MISO (initiales des mots anglais « *Multiple-Input Single-Output* » signifiant « Entrée-Multiple Sortie-Unique ») et MIMO (initiales des mots anglais « *Multiple-Input Multiple-Output* » signifiant « Entrée-Multiple Sortie-Multiple »). Ci-après, on utilisera le mot « antenne » pour désigner indifféremment soit une antenne au sens propre soit un groupe d'antennes.

Pour chaque antenne numéro $s$, où $s = 1, \ldots A$, soit $h_{s \to \vec{r}}$ l'atténuation du signal entre cette antenne et un point $\vec{r}$ du réseau. On rappelle (cf. http://fr.wikipedia.org/wiki/Affaiblissement de propagation) que l'atténuation, également appelée « affaiblissement de propagation » (« *path loss* » en anglais), caractérise l'affaiblissement que subit une onde électromagnétique lorsqu'elle parcourt une certaine distance ; cet affaiblissement est dû à la dispersion de la puissance, ainsi qu'aux obstacles rencontrés par l'onde sur son chemin.

On désigne par $D_s$ la zone géographique desservie par l'antenne numéro $s$, autrement dit :

$$D_s = \left\{ \vec{r} \,\middle|\, h_{s \to \vec{r}} > h_{s' \to \vec{r}} \ \ \forall s' \in 1, \ldots A \ et \ s' \neq s \right\} .$$

Le système de télécommunications selon l'invention comprend une station serveuse telle que décrite succinctement ci-dessus, connectée à au moins deux antennes (ou groupes d'antennes). Chaque antenne respective est située dans une zone géographique respective séparée de chacune des autres zones géographiques analogues par au moins une paroi. Avantageusement, l'utilisation d'une pluralité d'antennes permet à la station serveuse selon l'invention de desservir simultanément une pluralité de zones géographiques en fonction du trafic de communications dans chacune de ces zones.

Considérons à présent, à titre d'exemple de réalisation, l'application de l'invention à un réseau UMTS.

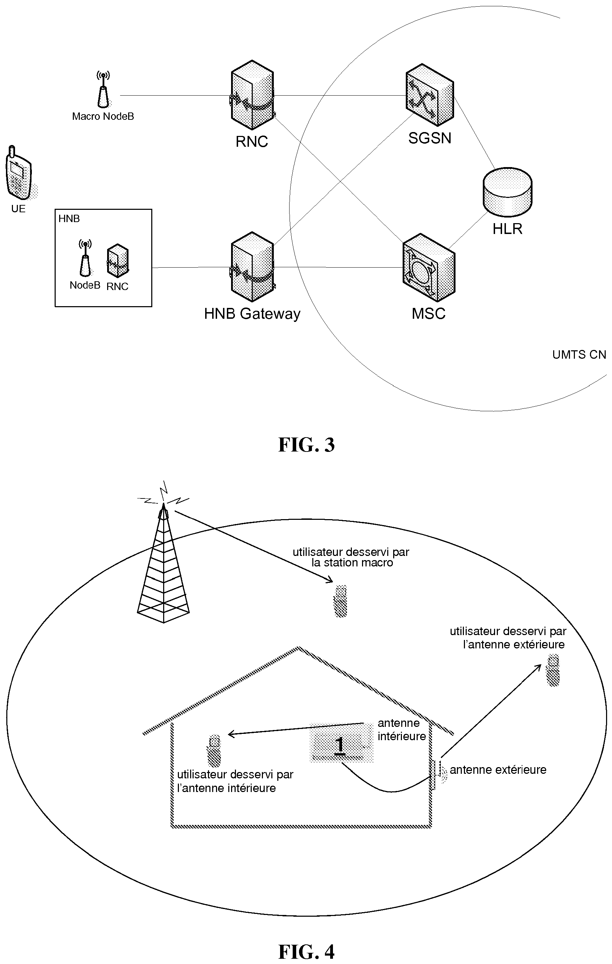

La **figure 3** représente schématiquement une architecture classique de réseau UMTS comprenant des cellules « femto NodeB », telles que mentionnées ci-dessus.

Le réseau UMTS est subdivisé en deux sous-réseaux, le réseau d'accès radio dit « terrestre » UTRAN (« *UMTS Terrestrial Radio Access Network* » en anglais), et le réseau cœur CN (« *Core Network* » en anglais). Le réseau UTRAN comprend une pluralité de stations radio de base, appelées « NodeB », qui sont destinées à communiquer avec des dispositifs d'abonnés UE (« *User Equipment* ») au moyen de ressources radio allouées par un RNC (« *Radio Network Controller* »). Le RNC joue dans les réseaux UMTS un rôle équivalent à celui joué par les BSC dans les réseaux GSM : le RNC contrôle les NodeB en leur allouant les ressources UTRAN et CN disponibles, et en leur fournissant des informations à diffuser au sein de leurs cellules. Le RNC sert d'intermédiaire entre les NodeB et le CN ; il communique avec le CN, pour les échanges de données et la signalisation.

Le réseau cœur CN des architectures GSM et UMTS héberge un serveur HLR (initiales des mots anglais « *Home Location Register* » signifiant « Registre de Localisation Nominal »), dans laquelle sont stockées les informations relatives à chaque abonné de l'opérateur du réseau, telles que le numéro d'appel de l'abonné, l'identité du mobile et des informations relatives à l'abonnement. Le HLR contient également des informations de qualité de service liées aux abonnés et aux services. C'est donc à partir de cette base de données que s'effectue la gestion des abonnés mobiles au sein du réseau.

Le réseau cœur CN des architectures GSM et UMTS héberge également des commutateurs de circuits MSC (« *Mobile Switching Center* ») et des commutateurs de paquets SGSN (initiales des mots anglais « *Serving GPRS Support Node* » signifiant « Nœud de Service pour le Support du GPRS »). Ces nœuds de service du réseau cœur assurent la gestion du lien de communication avec le réseau d'accès. Ils stockent le profil de l'abonné issu du HLR après l'enregistrement de l'équipement UE de l'abonné auprès du réseau, et effectuent un contrôle des ressources réseaux demandées par l'abonné.

Concernant la commutation en mode circuit, le MSC est associé à un autre nœud de service, à savoir le GMSC (« *Gateway Mobile Switching Center* ») (non représenté sur la figure 2), qui sert de passerelle vers des réseaux fixes tels que le RTC (Réseau Téléphonique Commuté) ou le RNIS (Réseau Numérique à Intégration de Services).

Concernant la commutation en mode paquets, le SGSN gère l'itinérance, l'authentification et le chiffrement. Il est associé au GGSN (« *Gateway GPRS Support Node* ») (non représenté sur la figure 2), qui sert de passerelle vers les réseaux à commutation de paquets extérieurs, notamment le réseau Internet. Le réseau cœur UMTS, en ce qui concerne le domaine paquet, est donc connecté avec l'extérieur via le GGSN, qui contient les informations de routage permettant au mobile de communiquer avec un réseau externe. Le SGSN et le GGSN intègrent des fonctions de routeur IP.

La **figure 4** illustre schématiquement un mode de réalisation du système de télécommunications selon l'invention.

Cette figure montre une station serveuse 1 jouant le rôle de *Home NodeB* (HNB) et connectée à deux antennes, dont l'une est intérieure à la maison et l'autre extérieure. L'antenne intérieure dessert une zone géographique $D_1$ intérieure à la maison, et l'antenne extérieure dessert une zone géographique $D_2$ extérieure à la maison.

Le signal de contrôle selon l'invention permet avantageusement, en jouant sur les puissances respectives des signaux émis par les deux antennes, de faire varier le degré de déchargement de la station macro réalisé par le HNB 1.

Par comparaison avec un HNB domestique classique (connecté seulement à une antenne intérieure), l'ajout d'une antenne extérieure permet d'agrandir la couverture de ce HNB, tout en maintenant des niveaux de puissance rayonnée classiques.

On rappellera pour terminer que les applications de la présente invention ne se limitent pas aux réseaux mobiles cellulaires. L'invention s'applique par exemple aux réseaux sans-fil (radiofréquences ou autres) tels que les réseaux Wi-Fi.

Comme indiqué ci-dessus, la présente invention concerne également un système informatique gérant le fonctionnement d'une station telle que décrite ci-dessus. Ce système informatique comporte de manière classique une unité centrale de traitement commandant par des signaux une mémoire, ainsi qu'une unité d'entrée et une unité de sortie.

De plus, ce système informatique peut être utilisé pour exécuter un programme d'ordinateur comportant des instructions pour gérer le fonctionnement d'une station selon l'invention.

En effet, l'invention vise aussi un programme d'ordinateur téléchargeable depuis un réseau de communication comprenant des instructions pour gérer le fonctionnement d'une station selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations, inamovible, ou partiellement ou totalement amovible, lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB (« *USB flash drive* » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme d'ordinateur est incorporé, le circuit étant adapté pour exécuter ou pour être utilisé dans le but de gérer le fonctionnement d'une station selon l'invention.

## Revendications

1. Station émettrice et/ou réceptrice d'ondes électromagnétiques, comprenant au moins deux ports d'antenne, chaque port d'antenne respectif pouvant être :

   - connecté à un groupe d'antennes respectif comportant une ou plusieurs antenne(s), et
   - alimenté par un signal respectif, lesdits signaux respectifs étant deux à deux soit identiques, soit différents uniquement en ce qui concerne leur puissance respective,

ladite station (1) comprenant des moyens de réglage (5) aptes à régler séparément la puissance respective d'au moins un desdits signaux respectifs, et des moyens de commande (6) aptes à commander lesdits moyens de réglage (5) conformément à un signal de contrôle reçu par ladite station (1).

2. Station selon la revendication 1, **caractérisée en ce qu'**elle comprend des moyens pour recevoir ledit signal de contrôle de la part d'un opérateur réseau *via* un lien *backhaul* (2) avec le cœur de réseau (3).

3. Station selon la revendication 1, **caractérisée en ce qu'**elle comprend des moyens pour recevoir ledit signal de contrôle de la part d'un opérateur réseau *via* une liaison sans-fil (8).

4. Système de télécommunications, **caractérisé en ce qu'**il comprend une station (1) selon la revendication 1 connectée à au moins deux groupes d'antennes, et **en ce que** chaque groupe d'antennes respectif est situé dans une zone géographique respective séparée de chacune des autres zones géographiques analogues par au moins une paroi.

5. Système de télécommunications selon la revendication 4, **caractérisé en ce qu'**une première zone géographique est située à l'intérieur d'un bâtiment, et une deuxième zone géographique est située à l'extérieur du même bâtiment.

6. Système de télécommunications selon la revendication 4, **caractérisé en ce qu'**il fait partie d'un réseau mobile hétérogène.

7. Système de télécommunications selon la revendication 4, **caractérisé en ce qu'**il fait partie d'un réseau sans-fil.

8. Moyen de stockage de données inamovible, ou partiellement ou totalement amovible, comportant des instructions de code de programme informatique pour gérer le fonctionnement d'une station (1) selon la revendication 1 lorsque le moyen de stockage de données est présent au sein de la station, les instructions permettant de gérer des moyens de réglage (5) pour régler séparément la puissance respective d'au moins un desdits signaux respectifs, et de gérer des moyens de commande (6) pour commander lesdits moyens de réglage conformément à un signal de contrôle reçu par ladite station.

9. Programme d'ordinateur téléchargeable depuis un réseau de communication et/ou stocké sur un support lisible par ordinateur et/ou exécutable par un microprocesseur, **caractérisé en ce qu'**il comprend des instructions pour gérer le fonctionnement d'une station (1) selon la revendication 1, lorsqu'il est exécuté sur un ordinateur présent au sein de la station, les instructions permettant de gérer des moyens de réglage (5) pour régler séparément la puissance respective d'au moins un desdits signaux respectifs, et de gérer des moyens de commande (6) pour commander lesdits moyens de réglage conformément à un signal de contrôle reçu par ladite station.

**Patentansprüche**

1. Station zum Senden und/oder Empfangen elektromagnetischer Wellen, umfassend mindestens zwei Antennenanschlüsse, wobei jeder jeweilige Antennenanschluss:

   - an eine jeweilige Antennengruppe angeschlossen werden kann, die eine oder mehrere Antenne(n) aufweist, und
   - von einem jeweiligen Signal gespeist werden kann, wobei die jeweiligen Signale paarweise entweder identisch sind oder sich nur in Bezug auf ihre jeweilige Leistung unterscheiden,

   die Station (1) umfassend Einstellmittel (5), die geeignet sind, die jeweilige Leistung mindestens eines der jeweiligen Signale getrennt einzustellen, und Steuermittel (6), die geeignet sind, die Einstellmittel (5) gemäß einem Steuersignal, das durch die Station (1) empfangen wird, zu steuern.

2. Station nach Anspruch 1, **dadurch gekennzeichnet, dass** sie Mittel zum Empfangen des Steuersignals von einem Netzbetreiber über eine Backhaul-Verbindung (2) mit dem Kern des Netzes (3) umfasst.

3. Station nach Anspruch 1, **dadurch gekennzeichnet, dass** sie Mittel zum Empfangen des Steuersignals von einem Netzbetreiber über eine drahtlose Verbindung (8) umfasst.

4. Telekommunikationssystem, **dadurch gekennzeichnet, dass** es eine Station (1) nach Anspruch 1 umfasst, die an mindestens zwei Antennengruppen angeschlossen ist, und dadurch, dass sich jede jeweilige Antennengruppe in einem jeweiligen geografischen Bereich befindet, der von jedem der anderen entsprechenden geografischen Bereiche durch mindestens eine Wand getrennt ist.

5. Telekommunikationssystem nach Anspruch 4, **dadurch gekennzeichnet, dass** sich ein erster geografischer Bereich innerhalb eines Gebäudes und ein zweiter geografischer Bereich außerhalb desselben Gebäudes befindet.

6. Telekommunikationssystem nach Anspruch 4, **dadurch gekennzeichnet, dass** es zu einem heterogenen Mobilnetz gehört.

7. Telekommunikationssystem nach Anspruch 4, **dadurch gekennzeichnet, dass** es zu einem Drahtlosnetzwerk gehört.

8. Nicht entfernbares oder teilweise oder vollständig entfernbares Datenspeichermittel, aufweisend Computerprogrammcode-Anweisungen zur Verwaltung des Betriebs einer Station (1) nach Anspruch 1, wenn das Datenspeichermittel innerhalb der Station vorhanden ist, wobei es die Anweisungen gestatten, Einstellmittel (5) zu verwalten, um die jeweilige Leistung mindestens eines der jeweiligen Signale getrennt einzustellen, und Steuermittel (6) zu verwalten, um die Einstellmittel gemäß einem Steuersignal, das durch die Station empfangen wird, zu steuern.

9. Computerprogramm, das aus einem Kommunikationsnetz herunterladbar ist und/oder auf einem Träger gespeichert ist, der von einem Computer gelesen und/oder von einem Mikroprozessor ausgeführt werden kann, **dadurch gekennzeichnet, dass** es Anweisungen umfasst, um den Betrieb einer Station (1) nach Anspruch 1 zu verwalten, wenn es auf einem Computer ausgeführt wird, der innerhalb der Station vorhanden ist, wobei es die Anweisungen gestatten, Einstellmittel (5) zu verwalten, um die jeweilige Leistung mindestens eines der jeweiligen Signale getrennt einzustellen, und Steuermittel (6) zu verwalten, um die Einstellmittel gemäß einem Steuersignal, das durch die Station empfangen wird, zu steuern.

## Claims

1. Station for transmitting and/or receiving electromagnetic waves, comprising at least two antenna ports, each respective antenna port being suitable for being:

   - connected to a respective group of antennas comprising one or more antennas, and
   - fed by a respective signal, said respective signals being pairwise either identical or different only in terms of their respective power,

   said station (1) comprising adjusting means (5) suitable for separately adjusting the respective power of at least one of said respective signals, and control means (6) suitable for controlling said adjusting means (5) in accordance with a control signal received by said station (1).

2. Station according to Claim 1, **characterized in that** it comprises means for receiving said control signal from a network operator via a backhaul link (2) to the core network (3).

3. Station according to Claim 1, **characterized in that** it comprises means for receiving said control signal from a network operator via a wireless link (8).

4. Telecommunications system, **characterized in that** it comprises a station (1) according to Claim 1 connected to at least two groups of antennas, and **in that** each respective group of antennas is situated in a respective geographical area separated from each of the other analogous geographical areas by at least one wall.

5. Telecommunications system according to Claim 4, **characterized in that** a first geographical area is situated inside a building, and a second geographical area is situated outside that same building.

6. Telecommunications system according to Claim 4, **characterized in that** it forms part of a heterogeneous mobile network.

7. Telecommunications system according to Claim 4, **characterized in that** it forms part of a wireless network.

8. Data storage medium that is non-removable, or partially or completely removable, comprising computer program code instructions for managing the operation of a station (1) according to Claim 1 when the data storage medium is present within the station, the instructions making it possible to manage adjusting means (5) for separately adjusting the respective power of at least one of said respective signals, and to manage control means (6) for controlling said adjusting means in accordance with a control signal received by said station.

9. Computer program downloadable from a communications network and/or stored on a medium that is readable by computer and/or executable by a microprocessor, **characterized in that** it comprises instructions for managing the operation of a station (1) according to Claim 1, when it is executed on a computer present within the station, the instructions making it possible to manage adjusting means (5) for separately adjusting the respective power of at least one of said respective signals, and to manage control means (6) for controlling said adjusting means in accordance with a control signal received by said station.

**FIG. 1a**

**FIG. 1b**

FIG. 2a

FIG. 2b

EP 2 727 391 B1

Macro NodeB

RNC

SGSN

HLR

UE

HNB

NodeB RNC

HNB Gateway

MSC

UMTS CN

**FIG. 3**

utilisateur desservi par
la station macro

utilisateur desservi par
l'antenne extérieure

antenne
intérieure

1

antenne extérieure

utilisateur desservi par
l'antenne intérieure

**FIG. 4**

13

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9637010 A
- WO 2010115467 A
- EP 1638356 A
- WO 2009029011 A

**Littérature non-brevet citée dans la description**

- **3GPP.** *TR 25.820 V8.2.0,* Septembre 2008
- **DE SARA AKBARZADEH ; RICHARD COMBES ; ZWI ALTMAN.** *Enhancing LTE network capacity using self-organized femtocell off-loading,* 2011